# EUROPEAN PATENT APPLICATION

(11) **EP 2 111 749 A2**
(43) Date of publication of application: **28.10.2009**
(21) Application number: 08017331.3
(22) Date of filing: 20.12.2006
(51) Int. Cl.: A01J 5/003, A01J 5/007, A01K 1/12, A01K 5/02

(54) **Dairy farm system and method for communication in such a dairy farm system**

(30) Priority: 21.12.2005 SE 0502842
(62) Divisional of application: 06841070.3
(71) Applicant: DeLaval Holding AB, 147 21 Tumba (SE)
(72) Inventor: Axelsson, Lars-Arne, 128 31 Skarpnack (SE); Caldenius, Thomas, 137 38 Vasterhaninge (SE); Jonsson, Robert, 116 44 Stockholm (SE); Li, Jianning, 191 36 Sollentuna (SE); Obermüller, Helmut, 112 25 Stockholm (SE); Ihrsén, Stefan, 645 40 Strangnas (SE); Carlson, Björn, 712 91 Hallefors (SE); Nebelong, Bjarne, 11540 Stockholm (SE)
(74) Representative: Jennings, Michael John

(57) **Abstract**

A dairy farm system comprises a plurality of apparatuses (11 a-e) for performing actions related to the operation of the dairy farm system, wherein the apparatuses are connected in a network (12), and at least one of the apparatuses (21, 26-28) is movable. The movable apparatus is wirelessly connectable to the network via a short-range radio link (23a-c, 26a-c, 27a-c, 28a-c), preferably a Bluetooth link. Advantageously, the movable apparatus is kept continuously connected in the network (12) via the radio link during operation. In one embodiment the movable apparatus is a feed device (21), wherein feeding instructions are received, and feeding status or error information is sent, by the feed device via the radio link.

## Description

### TECHNICAL FIELD OF THE INVENTION

The present invention relates to a dairy farm system as defined in the preamble of claim 1, and to a method for communication in such a dairy farm system.

### DESCRIPTION OF RELATED ART AND BACKGROUND OF THE INVENTION

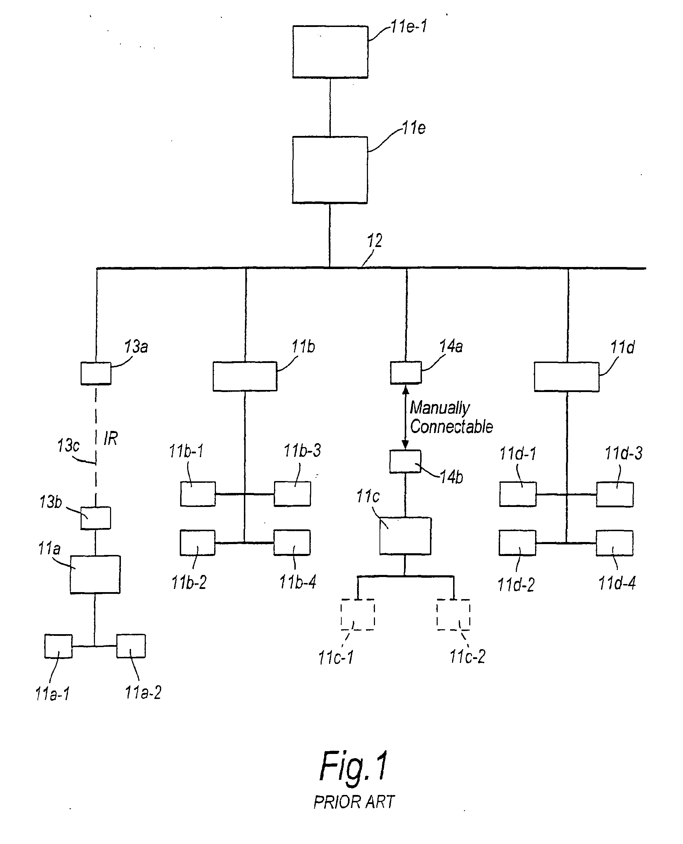

Such dairy farm systems are known in the art. Fig. 1 illustrates, in a schematic block diagram, one example of such a dairy farm system, which comprises a plurality of apparatuses or systems 11 a-e provided for performing actions related to the operation of the dairy farm system and connected to each other via a network 12. Reference numeral 11 a denotes a feed wagon, 11b denotes a feeding system, 11c denotes milking equipment for a milking position, 11 d denotes a plant control system, and 11e denotes a process and control apparatus.

The feed wagon 11a is connectable to the other apparatuses 11 b-e via an IR link 13a-c and comprises a feed wagon terminal unit 11a-1 and a feed wagon motor control 11a-2. Typically, the feed wagon is a battery-powered portable device movable along a ceiling-mounted rail to reach a charge position, one or several feeding positions, and a feed loading position. At one of these positions, preferably the charge position, the feed wagon is connected to the network 12 via the IR link 13a-c to receive feeding instructions from the process and control apparatus 11e. While leaving the charge position the feed wagon is no longer connected to the other apparatuses 11b-e. When the feed wagon returns to the charge position after feeding the communication via the IR link 13a-c may be reestablished.

The feed system 11b comprises feed stations 11b-1, 11b-2, and 11 b-3, and a calf feeder 11 b-4.

The milking equipment 11 c includes teat cups, vacuum hoses, pulsation vacuum hoses, etc. which are hanging from a rail in the ceiling and are movable to various milking positions in order to be capable of using the milking equipment for the milking of various animals at different milking positions.

During operation the milking equipment 11c is moved to a desired milking position. The vacuum hoses and the pulsation vacuum hoses are manually connected by the farmer to vacuum connectors present at the milking position. Similarly, a communication link is manually established by the farmer by connecting a connector 14b of the milking equipment 11c to a connector 14a of the network 12, which is fixedly arranged at the milking position. The milking equipment 11 c comprises an animal identification device 11c-1 for identification of an animal present at the milking position and a milk meter 11 c-2 for measuring the milk drawn from the animal. This animal identity and milk yield information is forwarded to the process and control apparatus 11e via the connection to the network 12 as established by the connectors 14a-b. After the milking is finished the vacuum hoses and the pulsation vacuum hoses are manually disconnected from the vacuum connectors at the milking position and the connector 14b is manually disconnected from the connector 14, after which the milking equipment may be moved to another milking position in order to milk an animal present at that milking position.

The plant control system 11d comprises a cleaning system 11 d-1, a receiver 11 d-2, a vacuum supply system 11 d-3, and a cooling tank 11 d-4.

The process and control apparatus 11e is responsible for the control of the dairy farm system, and comprises typically a microcomputer, suitable software, and a database including information of each of the animals at the dairy farm, such as e.g. when the respective animal was milked last time, when it was fed last time, its milk production, its health, etc. The process and control apparatus 11e is typically connected to a dairy management device 11e-1 e.g. in the form of a separate computer, by which management information may be retrieved and processed, and by which management instructions may be forwarded to the process and control apparatus 11 e.

### SUMMARY OF THE INVENTION

One shortcoming of the above dairy farm system is that the IR link between the feed wagon and the process and control apparatus may not always operate properly. The dairy farm environment is a non-clean and aggressive environment, and dirt may easily settle on the IR connector devices, which may render communication impossible. Further, the IR link may only be established while the feed wagon is parked at a particular position, i.e. the charge position. This means that the feed wagon is not capable of establishing any kind of fault communication in case it is stopped during operation at another position, e.g. while feeding the animals. The process and control device does not obtain any information and does consequently not know whether the animals have been fed or not.

Another shortcoming of the above dairy farm system is that the connector-to-connector connection between the milking equipment and the process and control apparatus is neither reliable due to the non-clean and aggressive environment, which is even worse in close proximity to an animal at the milking position. Dirt may settle on the connector at the milking position and render the connector-to-connector connection unreliable. Further, the manual connection is a working operation or stage that adds to the work load of the farmer. The operation adds necessarily time and thus costs to the milking procedure, which of course is undesirable.

It is thus an object of the present invention to provide a dairy farm system and a method for communication therein, which lack at least some of the drawbacks mentioned above with regard to the prior art system.

It is a further object of the invention to provide such a dairy farm system and such a method, by which a more reliable feeding may be performed.

It is yet a further object of the invention to provide such a dairy farm system and such a method, by which a more reliable recording of animal specific milk production data may be performed.

It is still a further object of the invention to provide such a dairy farm system and such a method, which are flexible, efficient, reliable, precise, robust, easy to maintain and trouble-shoot, and of reasonably low cost.

These objects, among others, are according to the present invention attained by dairy farm systems and methods for communication as claimed in the appended patent claims.

According to an aspect of the invention a dairy farm system comprising a plurality of apparatuses for performing actions related to the operation of the dairy farm system is provided. The apparatuses are connected in a network and at least one of the apparatuses is movable and wirelessly connectable to the network via a short-range radio link, preferably a Bluetooth link.

The actions described above preferably relate to the milking and/or feeding of a dairy animal.

The system of the present invention is particularly suitable for a tied-up barn installation in which animals are tied or otherwise kept in fixed stalls. The use of advanced communication equipment in a relatively basic environment can reap large benefits for the farmer.

The movable apparatus is advantageously a feed device such as a feed wagon movable along a rail in a dairy farm bam, or milking equipment for milking an animal present at a milking position.

The feed device may be continuously connected in the network via the short-range radio link, and may be provided for receiving feeding instructions from another apparatus, e.g. a process and control apparatus, and for reporting feeding status information back to that apparatus. If an error occurs in the operation of the feed device, it may alarm the process and control apparatus, and optionally informs the process and control apparatus if feeding has started, ended, or been interrupted during feeding, and in the latter case at what stage of feeding the interruption occurred. The dairy farm system thus obtains detailed information of the feeding as performed by the feed device, thereby providing for a reliable feeding.

Further, the dairy farm system may comprise a portable device which may be wirelessly connectable to the feed device via a short-range radio link. Such portable device may be provided for reading data from the feed device and/or for giving the feed device instructions, thereby providing for a more flexible operation of the dairy farm system.

In one embodiment there are a plurality of movable apparatuses including at least one feed device and one or several milking equipments, each being wirelessly connectable to the network via a short-range radio link. There may be as few as a single short-range radio connector or transceiver fixedly connected in the network for establishing short-range radio links to several movable apparatuses, e.g. one at a time in the case feeding and milking are not performed simultaneously. In other embodiments depending e.g. on the number of movable apparatuses and their movement range a plurality of short-range radio connectors fixedly connected in the network may be provided at different positions. In some embodiments a single movable apparatus may need to connect to more than one short-range radio connector in order to continuously stay connected in the network.

According to the present Bluetooth standard, a maximum of eight modules can be wirelessly connected in a Bluetooth piconet wit one master and up to seven slaves. In order for a system according to the present invention to accommodate more modules, whether using Bluetooth or another radio connection, it may be necessary for one or more apparatuses to be disconnected during periods when no data is being transferred from the apparatus to the network. Preferably a link is established when data is to be sent and it is disconnected after the data has been sent.

According to another aspect of the invention there is provided a method for communication in a dairy farm system comprising a plurality of apparatuses for performing actions related to the operation of the dairy farm system, wherein the apparatuses are connected in a network, and at least one of the apparatuses is movable. The method comprises the steps of connecting the movable apparatus wirelessly to the network by means of establishing a short-range radio link, preferably a Bluetooth link; and sending data from the movable apparatus to another one of the apparatuses via the short-range radio link.

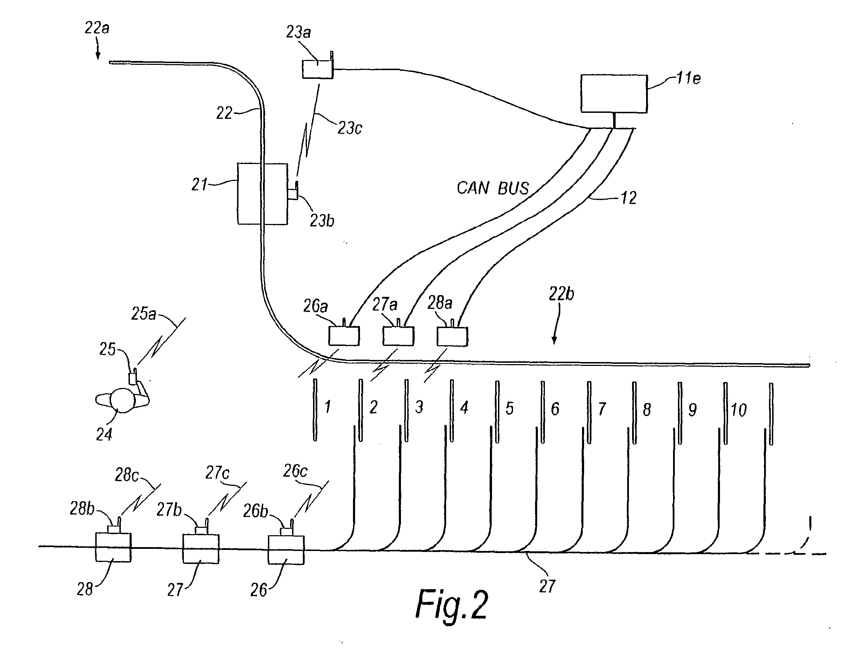

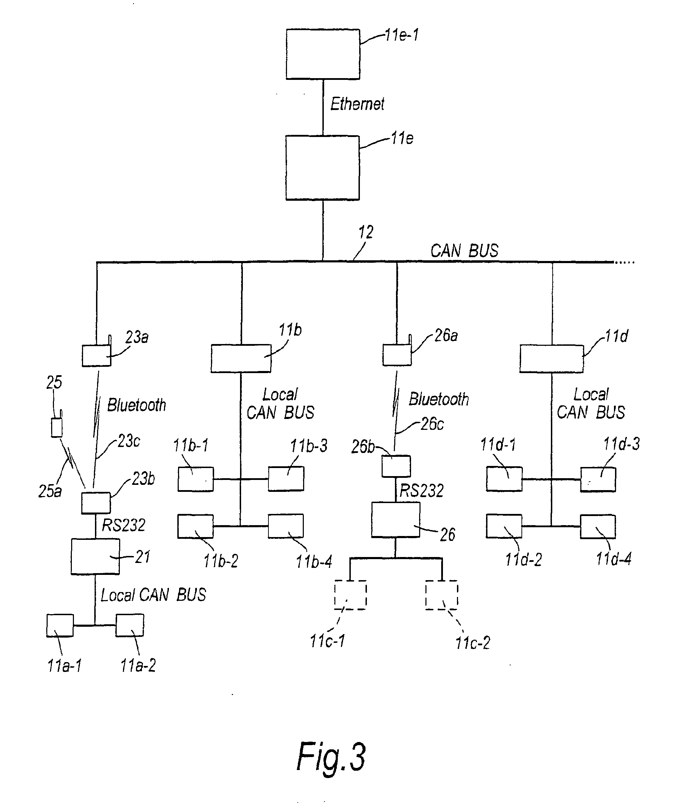

Further characteristics of the invention and advantages thereof will be evident from the following detailed description of embodiments of the invention given herein below and from the accompanying Figs. 2 and 3, which are given by way of illustration only, and thus are not limitative of the present invention.

In the detailed description the milk-producing animals are cows. However, the invention is not limited to milking systems for cows, but is applicable to milking systems for any animals having the capability to produce large quantities of milk, such as sheep, goats, buffaloes, horses, etc., usually referred to collectively as dairy animals.

### BRIEF DESCRIPTION OF THE DRAWINGS

Fig. 1 illustrates, in a schematic block diagram, a dairy farm system according to prior art.
Fig. 2 illustrates, in a schematic top view, parts of a dairy farm system according to the invention.
Fig. 3 illustrates, in a schematic block diagram, an overview of the dairy farm system of Fig. 2.
Fig. 4 illustrates milking equipment according to the present invention.
Fig. 5 illustrates a part of the equipment shown in Fig. 4

### DETAILED DESCRIPTION OF EMBODIMENTS

Figs. 2 and 3 show a dairy farm system for tied-up cows comprising a battery-powered feed wagon 21 movable along a rail 22 mounted in the ceiling of a dairy farm barn. The feed wagon 21 moves automatically between a first position 22a and a number of second positions 22b. The first position 22a may be a charge position including a charger for charging the battery of the feed wagon and/or it may be a position, at which the feed wagon 21 can be supplied with feed from a feed supply device. The second positions 22b may be feeding positions, at which the feed wagon 21 is provided for delivering feed, e.g. hay, ensiled feed, or concentrate, to the cows of the dairy farm system. Conveniently feed tables or other devices such as feed troughs are provided below the second positions 22b to receive feed delivered by the feed wagon 21.

The feed wagon 21 comprises a feed wagon terminal unit 11a-1 and a feed wagon motor control 11 a-2 interconnected on a local CAN bus (the feed wagon terminal unit 11a-1 and the feed wagon motor control 11 a-2 are only illustrated in Fig. 3).

The feed wagon 21 is wirelessly connected to a process and control device 11e via a Bluetooth or other short-range radio link 23a-c, e.g. based on any of the ZigBee, WLAN (Wireless Local Area Network), LPR (Low Power Radio), and UWB (Ultra Wide Band) technologies. The process and control device 11e is like the previously described with reference to the prior art responsible for control of the dairy farm, comprises typically a microcomputer, suitable software, and a database including information of each of the cows at the dairy farm system, and is connected to a dairy management device 11e-1 via e.g. an Ethernet link.

The Bluetooth link 23a-c comprises a Bluetooth transceiver or CAN-Bluetooth interface 23a connected to the process and control device 11e via a CAN bus 12, and a Bluetooth transceiver or CAN-Bluetooth interface 23b arranged at the feed wagon 21 and connected to the local CAN bus of the feed wagon 21 directly or via an RS232 cable, wherein the two Bluetooth transceivers 23a-b are provided to communicate with each other via a radio channel 23c. The feed wagon 21 can thereby stay continuously connected to the process and control device 11e independently on where along the rail 22 the feed wagon 21 is (provided that the feed wagon 21 is within a radio coverage distance from the Bluetooth transceiver 23a connected to the process and control device 11e). If the rail 22 is very long several Bluetooth transceivers 23a may be required at different positions to be capable of having the feed wagon 21 continuously connected to the process and control device 11 e. The range of Bluetooth may vary from about 5 m up to about 100 m depending on the transmitter power and on the environment.

Bluetooth is preferred since it uses frequency hopping between 79 different frequencies, thereby allowing other ISM-band traffic to go on simultaneously, and still being almost undisturbed. Bluetooth also provides encrypted data transmission.

A short-range radio network or connection that can be set up and run by the dairy farmer is preferred over an existing network such as a GSM or 3G network since in the latter case the dairy farmer has to rely upon operation by a third party for his/her own operation.

The feed wagon 21 is preferably provided for receiving feeding instructions from the process and control device 11e and for reporting feeding status information back to the process and control device 11 e via the short-range radio link 23a-c.

Further, the feed wagon 21 may be provided for alarming the process and control device 11 e in case an error has occurred in the feed wagon 21 or in the operation of the feed wagon 21.

A farmer 24 may be present in the barn and wear or hold a portable device 25, such as a PDA, equipped with Bluetooth communication capabilities. Such portable device 25 and the feed wagon 21 may establish a radio communication channel 25a so that the farmer may request and receive data from the feed wagon 21 and instruct the feed wagon 21 to perform a desired action.

By such provisions the operation of the feed wagon 21 and of the entire dairy farm system is greatly improved. The Bluetooth communication link provides for reliable connection, which is not soiled by the unclean environment that the cows inevitably create.

The link further provides for a continuous connection independently on where the feed wagon is at a given instance. The process and control apparatus 11 e of the dairy farm system is capable of, in case of an error has occurred, acquiring information whether the cows have been fed or not. Consequently, the present invention is an important step in providing an efficient dairy farm system where the cows are neither under-fed nor over-fed.

Further, the Bluetooth communication capabilities of the feed wagon 21 provide capabilities for the farmer to read data and control the feed wagon via a PDA or other portable device equipped with Bluetooth communication functionality.

It shall also be appreciated that the dairy farm system may comprise further feed wagons of the above kind or other movable feeding devices or arrangements.

The dairy farm system comprises further a number of milking positions numbered from 1 to 10; however, there may be several more milking positions. Typically, there may be as many milking positions as there are cows at the dairy farm. Further, there are several milking equipments 26-28, each of which being movable along a rail system to a respective milking position 1-10 and being provided for the milking of a cow present at the respective milking position 1-10. Each of the milking equipments 26-28 includes teat cups, vacuum hoses, pulsation vacuum hoses, etc. and is moved to a respective desired milking position. Each of the vacuum hoses and the pulsation vacuum hoses are manually connected by the farmer to vacuum connectors present at the respective milking position, which connectors are connected to a source of vacuum (not illustrated in Figs. 2 and 3).

Each of the milking equipments 26-28 comprises a cow identification device 11 c-1 for identification of a cow present at the milking position and a milk meter 11c-2 for measuring the milk drawn from the cow (the identification device 11c-1 and the milk meter 11c-2 are only illustrated in Fig. 3 with respect to the milking equipment 26). The milk meter may be integral with or separate from the milking equipment. The milk meter will provide milk yield information such as flow rate and quantity. It is also possible with currently available milk meters to determine the conductivity value of the milk, the colour (using RGB analysis) and other milk parameters. The colour analysis can be used for instance to detect the presence of blood in the milk. All of this data can be wirelessly communicated to the network to enable the farmer to better manage his herd.

Each of the milking equipments is wirelessly connected to the process and control device 11e via a respective Bluetooth or other short-range radio link 26a-c, 27a-c, 28a-c, and is provided for reporting cow identity and milk yield information to the process and control device 11e via the respective short-range radio link 26a-c, 27a-c, 28a-c.

Each of the Bluetooth links 26a-c, 27a-c, 28a-c comprises a Bluetooth transceiver or CAN-Bluetooth interface 26a, 27a, 28a connected to the process and control device 11e via the CAN bus 12, and a similar Bluetooth transceiver or CAN-Bluetooth interface 26b, 27b, 28b arranged at the respective milking equipment 26-28, wherein each pair of Bluetooth transceivers 26a-b, 27a-b, 28a-b are provided to communicate with each other via a respective radio channel 26c, 27c, 28c.

Each of the milking equipments 26-28 may further be provided for alarming or error notifying the process and control device 11e via the respective Bluetooth link 26a-c, 27a-c, 28a-c in case an error has occurred in the operation of the movable milking equipment 26-28.

By such provisions the operation of the milking equipments 26-28 and of the entire dairy farm system is greatly improved. The Bluetooth communication links 26a-c, 27a-c, 28a-c provides for reliable connection, which is not soiled by the dirty environment at the dairy farm.

The dairy farm system comprises further (as can be seen in Fig. 3) a further feeding system 11 b comprising feed stations 11 b-1, 11 b-2, and 11 b-3, and a calf feeder 11 b-4 interconnected on a local CAN bus, and a plant control system 11d comprising a cleaning system 11 d-1, a receiver 11 d-2, a vacuum supply system 11 d-3, and a cooling tank 11 d-4 interconnected on a local CAN bus.

While Fig. 2 illustrates only three milking equipments 26-28 and Fig. 3 illustrates only one milking equipment 26, it shall be appreciated that the dairy farm system may encompass more milking equipments such as e.g. eight. When milking is finished at one milking position, e.g. milking position 1, the milking equipment is disconnected from the vacuum connectors of that milking position and is moved to another desired milking position for milking the cow at that milking position, e.g. milking position 9 provided that there are eight milking equipments available. When milking at milking position 2 is finished the milking equipment used at that milking position is moved to milking position 10, etc. until the milking of the cows at all the milking positions has been accomplished.

It shall be appreciated that the number of Bluetooth transceiver or CAN-Bluetooth interfaces 23a, 26a, 27a, 28a may range from one to any positive integer. For instance, in a smaller dairy farm several ones of the feed wagon 21, and the milking equipments 26-28, i.e. up to seven as set by the Bluetooth IEEE standard, may share a common Bluetooth transceiver or CAN-Bluetooth interface on the CAN bus 12 for communication. In a larger dairy farm there may be required several Bluetooth transceiver or CAN-Bluetooth interfaces for a single movable dairy farm apparatus if it is moved a fairly long distance, i.e. out of range of a single Bluetooth transceiver or CAN-Bluetooth interface.

The present Bluetooth standard limits the number of Bluetooth-enabled units that can be connected in a Bluetooth "piconet" to one master unit and up to seven slaves. In some situations it may be desirable to connect a larger number of units to each other. In the present invention if milking equipment, feed devices and portable devices are all to be wirelessly connected to a network the total number of units may exceed eight. In that case it is preferable for the apparatus being wirelessly connected to the network to establish a connection only when there is data to communicate and then disconnect after data has been transferred. For a known Bluetooth address connection typically takes 1 second and the data rate is around 400kbit/s. In the environment of a dairy farm system the probability of a collision is small and even if it occurs it will simply mean that the operator has to wait just a few seconds before a connection can be established.

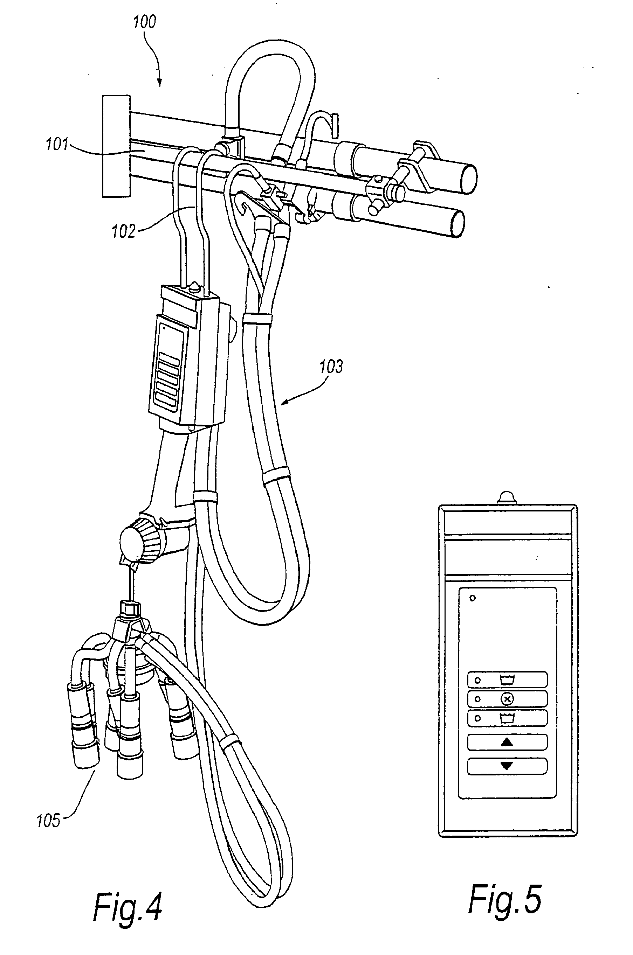

An example of milking equipment is shown in more detail in figures 4 and 5. The equipment, generally indicated by numeral 100 is attached to rail 101 by means of hook 102 and includes pulse tubes 103 and teat cluster 105. Milk delivery pipes run parallel to the rail 101 and the pulse tubes are connectable to the delivery pipes at various points along the rail.

The equipment has a user interface illustrated separately in figure 5 by means of which animal identity data can be input and parameters adjusted. Alternatively this can be done using a remote device such as a PDA as described elsewhere.

In the system according to the invention a number of parameters are configurable, advantageously by the management device 11e including:

| **Parameter name** | **Related Parameter** | **Explanation** | **Possible value** | **Step** | **Default Value** | **Access right & unit** |
|---|---|---|---|---|---|---|
| Vacuum on Delay | | The delay between pressing of start/stop button and activating of vacuum. | 0_5.0 s. | 0.1 s. | 0 s. | 4 MUG + DDM |
| Main-Milking Pulsation Rate | | | 50-60 pulses/mim | - | 60 pulses/mi n | 3 DDM |
| | Main-Milking Pulsation | | 65/35 60/40 70/30 | - | 65/35 | 3 DDM |
| | Ratio | | | | | |
| Low-Flow Limit | | The limit sets the flow required to go from pre-milking phase to main-milking phase. And is used for the time out low flow function. | 100-500 g/min | IOg. | 200 g/min | 3 DDM |
| Take-Off Limit | | The limit sets the flow from main-milking phase to post-milking phase. And starts the timer for post milking duration. | 100-2200 g/min | 10g. | 200 g/min | 3 DDM |
| Pre-Milking Timer | | Maximum allow pre-milking duration. | 60-240s | 1s. | 120 s. | 3 DDM |
| Post-Milking Timer | | Time delay from start of post-milking phase to cluster removal. | 0-40s | 1s. | 20 s. | 3 DDM |
| Take-Off delay | | Time between vacuum shut-off and retraction. | 0-9.9s | 0.1s. | 3.5 s. | 4 MUG +DDM |
| Milk sweep | | | yes/no | - | tbd | 4 MUG +DDM |
| | Sweep delay | | Tbd( MPC=1.0-9.9) | tbd | tbd | 4 MUG +DDM |
| | Sweep duration | | Tbd( 0.1-9.9) | Tbd | Tbd | 4 MUG +DDM |
| Duovac | | | Duovac-Monovac | | Duovac | 3 DDM |
| | Forced vac time | | 0-150 | 1s | 30 | 3 DDM |
| | Auto high vacuum | | Yes-no | - | no | 3 DDM |
| | Auto forced vac delay | | 15-120 | 1s | 60 | 3 DDM |
| Milk meter/ Flow indicator | | | FI-MM25 | - | Automati c? | 2 DDM |
| Regulator block mode | | | On9OMin-onCont | - | On9OMin | 2 DDM |
| ACR Option | | SGL: single retraction of 15s DBL: double retraction: 8S retraction, 1s pause and 8s retraction. P: Pulsating during | SGL SGLP SGLB DBL DBLP DBLB | | SGL | 3 DDM |
| | | retraction. B: ballooning that means both pulsating valves | | | | |
| | | open. Pulsating and ballooning duration is the same as the total retraction time. | | | | |
| Milker ID | | Sets the if the MUG shall ask for Milker ID number when setting the MUG to Milking mode. Used when the function "Summing milk weight on individual milkers" is used. | Yes-no | | No | 3 DDM |
| Cow ID mode | | Allows milker to start milking a cow wlo entering her Cow ID number. | Tbd | | tbd | 3 DDM |
| Override blocking | | Is it allowed for milker to override blockage when "Don't milk" is set to a cow. | Yes-no | | tbd | 3 DDM |
| Auto take-off when abnormal milk quality | | Shall the MUG automatically retract the cluster if the sensors in the MUG sense an abnormal milk quality? | Yes-no | | tbd | 3 DDM |

The two-way communication between movable apparatus and the network opens up many possibilities for herd management. For example, data from the milk meter may indicate that the animal has mastitis or some other udder infection. This can be determined from the milk conductivity or colour. In that case it is preferable to milk the animal for longer than usual since this aids recovery from the infection. Thus, whilst milking would usually stop after the milk flow has dropped below a certain threshold, if the animal has an infection this threshold may be set lower. The vacuum and/or pulsation parameters might be altered in order to give less discomfort to an animal with an infection. The vacuum and/or pulsation parameters might be altered also for an animal with no infection.

An animal activity meter may also be included in the system according to the invention. This will give indications as to the overall health of the animal as well as the timing of her menstrual cycle. It may be advantageous to adjust milking and/or feeding parameters in response to data from the activity meter. Additionally, the milk yield of an animal could be used to adjust the feed amount supplied to the animal in question.

The system may contain stored data relating to the condition of the animals which may be used to adjust feeding and/or milking parameters. Therefore it is important that animal identity data is correctly input to the system. Since milking and/or feeding is not always carried out in the same order, animal identity data can be input/updated using the portable device 25.

It shall be appreciated that the present invention may be implemented in other dairy farm systems than that of Figs. 2 and 3 as long as they comprise a plurality of interconnected dairy farm apparatuses wherein at least one of them is movable.

## Claims

1. A dairy farm system comprising a plurality of apparatuses (11a-e) for performing actions related to operation of said dairy farm system, wherein said apparatuses are connected in a network (12); and at least one of said apparatuses (21, 26-28) is movable, **characterized in that** one of said movable apparatuses is a milking equipment (26-28) for the milking of an animal, said milking equipment (26-28) being wirelessly connectable to said network (12) via a short-range radio link (23a-c, 26a-c, 27a-c, 28a-c), the milking equipment (26-28) being arranged to operate in accordance with data and/or instructions communicated from one or more of the other apparatuses in the dairy farm system

2. The system of claim 1 wherein the movable milking equipment (26-28) comprises a plurality of such movable milking equipments (26-28).

3. The system of claim 1 and 2 wherein the movable milking equipment (26-28) is arranged for milking an animal at one or more milking positions (1-10) such that when milking is finished at a milking position, said movable milking equipment is capable of being moved to another milking position for milking an animal present at the other milking position .

4. The system of claim 3 wherein each of said milking equipments (26-28) include equipment such as teat cups, vacuum hoses and pulsation vacuum hoses and wherein each of the vacuum hoses and pulsation vacuum hoses are manually connected to vacuum connectors present at each of the milking positions (1 -10).

5. The system of claims 1 to 4 wherein said movable milking equipment (26-28) is movable along a rail (22) in a dairy farm barn.

6. The system of claim 1 wherein said movable milking equipment is provided for reporting animal identity and milk yield information to a process and control device (11e).

7. The system of claim 1 wherein said movable milking equipment is provided for alarming or error notifying a process and control device (11e) in case an error has occurred in said movable milking equipment or in the operation of said movable milking equipment.

8. The system of claims 1 to 7 wherein said at least one of said apparatuses is a milk meter.

9. The system of any preceding claim wherein said system is suitable for a tied up barn installation in which animals are tied or otherwise kept in fixed stalls.

10. The system of any of any preceding claim wherein said at least one of said apparatuses comprises a portable device (25).

11. The system of claim 10 wherein said portable device (25) is wirelessly connectable to one or more of said movable devices via a short-range radio link (25, 25a, 23b).

12. The system of any preceding claim wherein at least one of said plurality of apparatus is an animal activity meter and the system is capable of storing data relating to the condition of animals using the dairy farm system, said activity meter being arranged to communicate with the process and control device (11e).

13. A method for communication in a dairy farm system comprising a plurality of apparatuses (11a-e) for performing actions related to the operation of said dairy farm system, wherein said apparatuses are connected in a network (12), and at least one of said apparatuses is movable, **characterized by** the steps of:
- connecting said at least one of said apparatuses wirelessly to said network by means of establishing a short-range radio link (23a-c, 26a-c, 27a-c, 28a-c), preferably a Bluetooth link, the at least one of said movable apparatuses being a milking equipment (26-28);
- communicating data and/or instructions between said movable milking equipment (26-28) to another one (11e) of said apparatuses via said short-range radio link; and
- operating the movable milking equipment (26-28) in response to the communicated data/instructions.

14. The method of claim 13 wherein said movable milking equipment (26-28) is provided for the milking of an animal at a milking position (1-10); and said data comprises animal identity and milk yield information sent from said movable milking equipment to another one of said apparatuses.

15. The method of claim 13 or 14 wherein said at least one of said apparatuses is a milk meter, which is integral with or separate from milking equipment, and the data includes one or more of milk flow rate, conductivity, colour and quantity.

16. The method of claims 13, 14 or 15 wherein control signals are sent to the movable milking equipment (26-28) to perform one or more of the following actions:
disconnect teat cups;
adjust vacuum level;
adjust pulsation;
discard milk; and
adjust milking duration.;

17. The method of any of claims 13 to 16 wherein a portable device (25) is wirelessly connected to said at least one movable apparatus by means of establishing a second short-range radio link (25, 25a, 23b), preferably a Bluetooth link; and
- instructions are sent from said portable device to said movable apparatus via said second short-range radio link; and/or
- status information is sent from said movable apparatus to said portable device via said second short-range radio link.

18. The method of any of claims 13 to 17 wherein the dairy farm system includes an animal activity meter and instructions are sent to said at least one movable apparatus in response to data received from said animal activity meter.
